# EUROPEAN PATENT SPECIFICATION

(11) **EP 2 599 413 B1**
(45) Date of publication and mention of the grant of the patent: **16.07.2014**
(21) Application number: 11191815.7
(22) Date of filing: 02.12.2011
(51) Int. Cl.: A47J 31/44

(54) **Device for compression of the filter-holder in the dispenser unit of professional coffee machines**
Vorrichtung zum Zusammendrücken des Filterhalters in einer Ausgabeeinheit einer professionellen Kaffeemaschine
Dispositif pour la compression du support de filtre dans l'unité de distribution de machines à café professionnelles

(43) Date of publication of application: 05.06.2013
(73) Proprietor: Ambrosini, Marco, 37060 Buttapietra (VR) (IT)
(72) Inventor: Ambrosini, Marco, 37060 Buttapietra (VR) (IT)
(74) Representative: Sandri, Sandro

(56) References cited:
- EP-A1- 0 838 185
- EP-A2- 1 559 351
- DE-A1- 1 454 200

## Description

### TECHNICAL FIELD

This invention relates to a device designed to automate the insertion and compression of the filter-holder in the dispenser unit of professional coffee machines or the like.

More specifically, this invention relates to a device designed to automate the insertion and adhesion of the filter-holder on the dispenser unit of coffee machines, in particular professional type machines to be used in public places such as bars or catering establishments in general.

The device according to this invention consists of a mobile body fitted on slides attached to the machine, the mobile body comprising a housing in which the filter-holder can be inserted manually and comprises an automatism allowing the mobile body to rise for allowing the filter-holder to move against the dispenser unit and to be compressed on the dispenser unit until the complete coupling of the filter-holder in the dispenser unit.

The mobile body may be moved using an eccentric cam or by mechanical elements designed for the same purpose.

This invention can be applied in the field of accessories for public, but also private, places and in particular in the sector of accessories for professional coffee machines of the espresso type, or coffee machines in general.

### BACKGROUND ART

It is known that for the preparation of coffees, the barmen prepare the dose of coffee to be inserted in the filter held by the typical filter-holder with the handle, compress the dose dispensed in the filter and then insert the filter-holder in the machine so as to dispense the coffee in the cup.

At the end of this operation, the barman removes the filter from the machine and removes the coffee grounds.

All these operations are carried out by hand, and in this regard it wil be understood that the physical effort by the barmen is considerable, especially if one considers the large quantities of coffee which businesses open to the public must often provide, and if one considers that each preparation involves the insertion and forced locking of the filter-holder in the dispenser unit of the coffee machine, as well as its opening and its removal at the end of the dispensing.

It should be noted that the physical effort exerted in all these operations is of a certain intensity, as the filter-holder must engage and compress inside the dispenser unit, so as to achieve a hermetic seal under the maximum pressure.

It would be desirable, in this context, that the operations for inserting and removing the coffee filter-holder were substantially automated and mechanised, so as to reduce to a minimum the effort of the personnel, and increase the possible production capacities.

EP-A-838185 discloses a coffee machine with a dispenser unit and a device for the insertion and compression of a filter-holder in said dispenser unit, said dispenser unit consisting of a rounded body whose lower part is designed to couple with a filter-holder fitted with a grip, said device comprising a mobile body fitted, by means of specific surfaces, with the possibility of moving vertically on said dispenser unit between a lowered release position and a raised traction position, said mobile body being hollow and comprising a housing in which the filter-holder can be inserted manually, said mobile body presenting a substantially hollow cylindrical shape.

DE-A-1454200 describes a coffee-machine having an automated coupling (in particular by means of a hydraulic system) of the filter-holder.

Document EP 1559351 A2 describes a device having the features disclosed in the preamble of claim 1 of the present application, whereby the filter holder and the dispenser unit of the coffee machine are manually pressed onto each other by means of a lever acting on a operating member positioned in an excentric position relative to the rotation axis of said lever.

### DESCRIPTION OF THE INVENTION

This invention proposes to provide a device designed to automate the insertion and compression of the filter-holder in the dispenser unit of professional coffee machines or the like, that is capable of eliminating or at least reducing the aforementioned drawbacks.

This invention also proposes to provide a device designed to automate the insertion and compression of the filter-holder in the dispenser unit of professional coffee machines or the like, which is extremely simple to make and therefore suitable for rapid diffusion in all public catering establishments, such as bars, restaurants or the like, or also for domestic use.

This is achieved by means of a device for the insertion and compression of the filter-holder in the dispenser unit of professional coffee machines or the like, the features of which are described in the main claim.

The dependent claims of the solution in question describe advantageous embodiments of the invention.

The main advantages of this solution, in addition to those due to its constructional simplicity, comprise firstly the fact that the device may be installed in combination with conventional type coffee machines, and so form part of a specific kit, or be installed on new, specially designed machines.

One of the advantages achieved with this invention relates to the considerable saving in time and energy in the operations for inserting, compressing and removing the filter-holder from the coffee machine dispensing unit, as the operations are performed almost automatically by the device according to this invention, with all the resulting advantages.

The device according to this invention substantially consists of a mobile body fitted on slides attached to the machine, the mobile body comprising a housing in which the filter-holder can be inserted manually and also comprises an automatism allowing the mobile body to rise for allowing the filter-holder to move against the dispenser unit and to be compressed on the dispenser unit until the complete coupling of the filter-holder in the dispenser unit.

The mobile body may be moved using an eccentric cam or by mechanical elements designed for the same purpose.

Moreover, it may be noted that the present invention as described in claim 1 substantially differs, aside from constructional details, from the one disclosed in the above cited EP-A-838185, in that the mobile body is able to slide vertically on slides by means of a cam-type automatism, such that the filter and the filter-holder including the dose of coffee are atomatically coupled to the dispenser unit. In this context, it is useful to observe that while systems with automated coupling of the filter-holder are well-known (see e.g. the hydraulic system described in the above cited document DE-A-1454200), none of them could be readily adapted to a device such as disclosed in EP-A-838185 without extensive modifications requiring the exercise of inventive skill.

### DESCRIPTION OF THE DRAWINGS

Other features and advantages of the invention will become clear on reading the description given below of one embodiment, provided as a non-binding example, with the help of the accompanying drawings, in which:
- Figure 1 is a schematic view partly in vertical cross section and partly of the side of the automatic device for receiving and gripping the filter-holder according to this invention in its entirety, in the releasing position;
- Figure 2 is a schematic view partly in vertical cross section and partly of the side of the automatic device for receiving and gripping the filter-holder according to this invention in its entirety, in the gripping and pulling position;
- Figures 3 and 4 are schematic front cross section views of of the device according to this invention in the releasing and pulling steps;

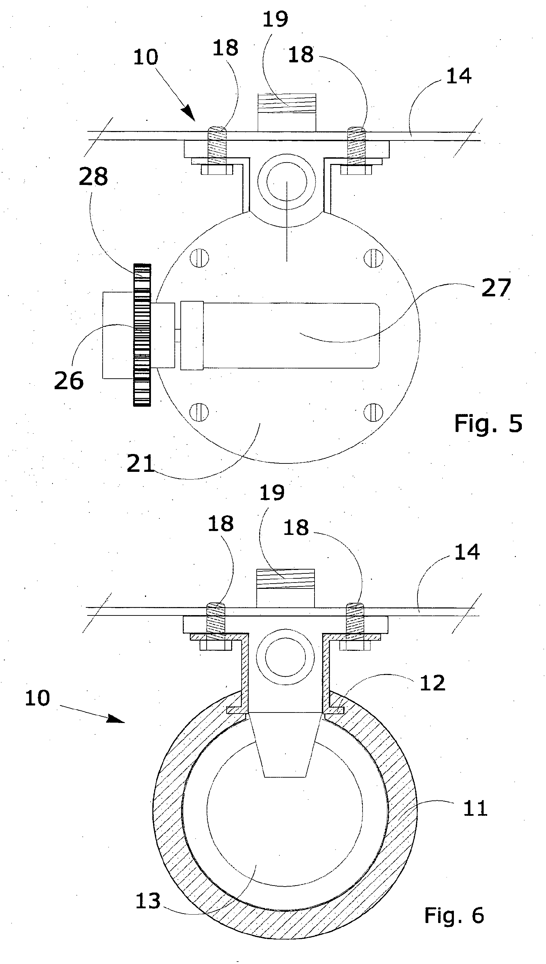

- Figures 5 and 6 are schematic plan and horizontal cross section views of the device according to this invention with the couplings for fixing on the coffee machine;
- Figures 7 and 8 are schematic views showing the front and side of the device according to this invention in its entirety.

### DESCRIPTION OF ONE EMBODIMENT OF THE INVENTION

With reference to the accompanying figures, the device according to this invention, referred to globally by numeral 10, consists substantially of a mobile body 11 applied, and able to slide vertically by means of slides 12, on the dispenser unit 13, in turn fixed on the casing 14 of a professional coffee machine.

More specifically, the dispenser unit 13 consists of a rounded body whose lower part is designed to couple with the filter-holder 15 fitted with a conventional grip 16, the rounded body forming a single piece with a support 17 designed to be fixed on the casing 14 of the coffee machine by screws 18.

The dispenser unit 13, and more specifically its support 17, comprise the pressurized, hot water couplings 19.

The mobile body 11 is hollow and comprises a housing 20 in which the filter-holder 15 can be inserted manually, the filter of which will then be pressed automatically on the dispenser unit 13, as described in more detail below.

The mobile body 11 has a substantially hollow cylindrical shape, closed at the top with a cover 21, fixed on the body 11 by adjustable screws 22, placed in contrast with traction springs, the cover acting as a support for the mechanical parts for the sliding of the body 11 which consist of a motor, a cam, a shaft and transmission gears, as described in more detail below, while, in correspondence with the lower part, the housing 20, in the hollow part, is delimited by a border 11' and is shaped in such a way as to accommodate the filter-holder 15, which is also cylindrical in shape and comprises peripheral coupling teeth 18 which form gripping elements for the border 11', in order to position and fix the filter-holder against the dispenser unit 13.

The mobile body 11 may slide vertically on the slides 12 with respect to the dispenser unit 13 allowing the filter and the filter-holder 15 including the dose of coffee to be dispensed to be coupled to the dispenser unit 13.

The upward movement of the body 11 when the filter-holder is inserted causes the movement and compression of the filter-holder unit against the dispenser unit 13, thus making it possible to proceed with dispensing of the coffee towards the lower part, through the nozzles 22 and into the respective cups.

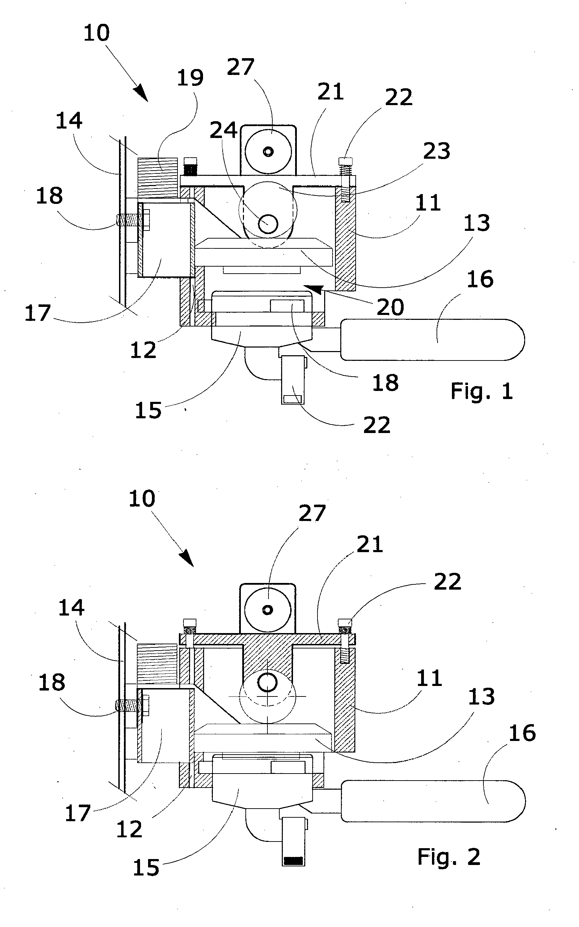

The movement of the body 11 from a lowered releasing position (Figure 1) to a raised traction position (Figure 2) is allowed by an automatism which may be made in various forms, the most functional of which is described below and is of the cam type, this expression not limiting the kinematic mechanism to this type, as other kinematic mechanisms may achieve the same purpose, and therefore fall within the scope of protection afforded by this invention.

According to the preferred embodiment, the movement of the body 11 is actuated by an automatism consisting of a cylindrical cam 23 positioned on a decentralized shaft 24 which is in turn arranged on a horizontal axis by means of supports 25 forming part of the cover 21.

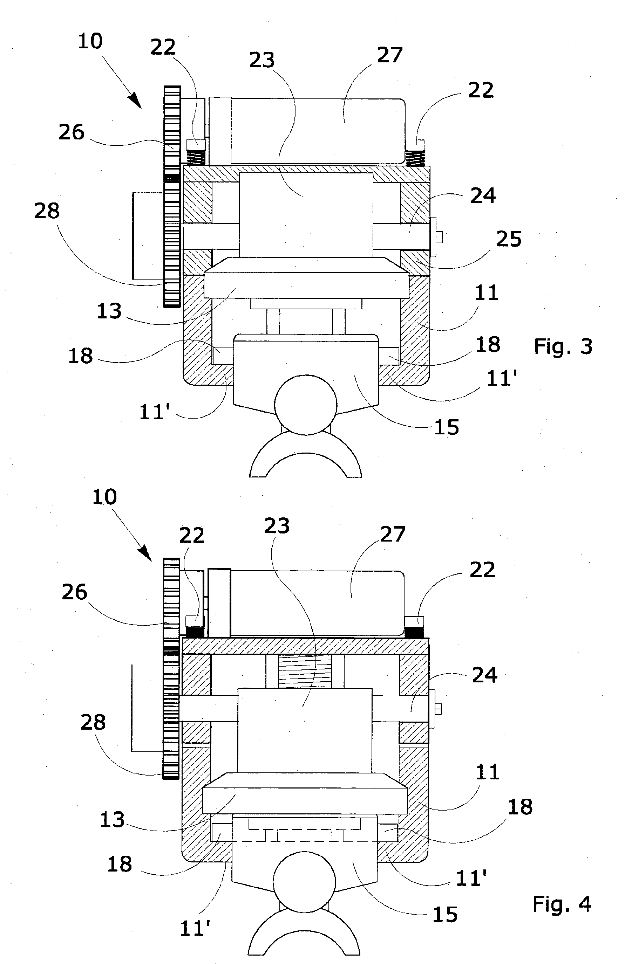

As shown in Figures 3 and 4, the cylindrical cam 23 presses against the dispenser unit 13, and since the shaft 24 fitted to the cover 21 is in turn integral with the body 11, by means of the adjustable screws 22 placed in contrast with springs, it causes the movement of the entire body 11 upwards and vice versa.

This allows the mobile body 11 to rise for allowing the filter-holder 15 to move against the dispenser unit 13 and to be compressed on the dispenser unit until the complete coupling of the filter-holder in the dispenser unit 13.

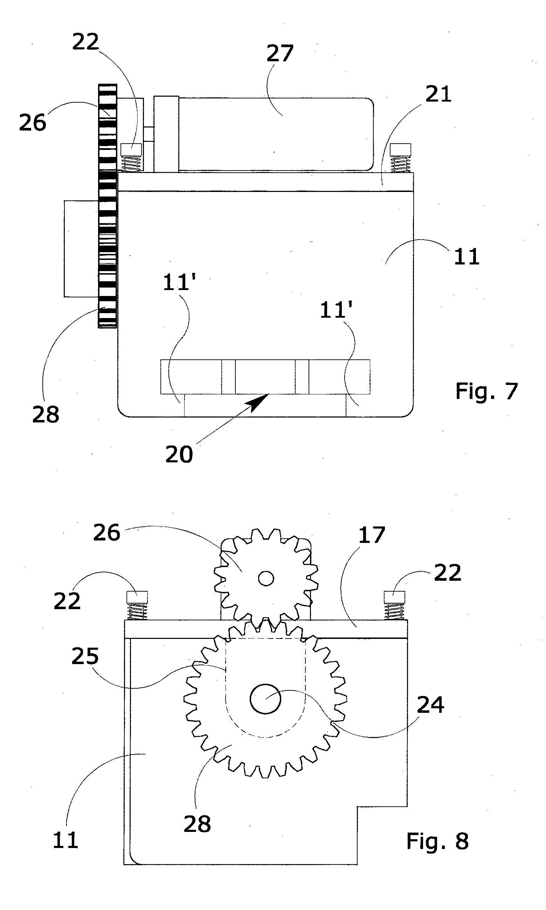

The eccentric rotation of the cam 23 on the shaft 24 is made possible by a kinematic motion shown in Figure 8, consisting of a pinion 26, driven by a motor 27, which engages with a second toothed pinion 28 integral with the cam shaft 24.

From the functional point of view, once the filter-holder has been inserted in the housing 20 of the body 11 in a lowered and open releasing position, it is sufficient to actuate the kinematic mechanism by starting the motor 27 so that the cam 23, pressing against the dispenser unit 13, lifts the body 11 until the filter-holder is fully compressed on the dispenser unit 13.

The dispensing of the coffee is now started and the body is then opened with the reverse procedure, allowing the removal of the filter-holder for the subsequent coffee making.

Obviously, a controller, a PLC or other electronic control system is provided, determining the compression force of the device, in combination with the calibration of the springs of the screws 22.

In this regard, it may be noted that the adjustment and closing force of the filter-holder 15 against the dispenser unit is determined by the screws 22 fitted with respective springs, by means of which it is possible to adjust the compression force between the filter-holder and the dispenser unit 13.

As stated above, the kinematic mechanism of the cams has been described above as one of the possible kinematic mechanisms designed for the same purpose. Hydraulic or pneumatic pistons, racks, actuators of various kinds, or even lever type mechanisms, which allow the body 11 to move vertically, may also be used.

The device according to this invention may also form part of a kit which can be fitted on existing or new generation machines.

In this regard, the couplings of the slides and the mobile body 11 can in turn be shaped and adapted for application on specific and particular coffee machines, forming part of different brands and models.

The invention is described above with reference to a preferred embodiment. It is nevertheless clear that the invention is susceptible to numerous variations which lie within the scope of its disclosure, in the framework of technical equivalents.

## Claims

1. A device (10) designed to automate the insertion and compression of the filter-holder (15) in the dispenser unit (13) of professional coffee machines or the like, said dispenser unit (13) consisting of a rounded body whose lower part is designed to couple with the filter-holder (15) fitted with a grip (16), said rounded body forming a single piece with a support (17) designed to be fixed on the casing (14) of the coffee machine by screws (18), said device (10) comprising a mobile body (11) fitted, by means of slides (12), with the possibility of sliding vertically, on said dispenser unit (13), said mobile body (11) being hollow and comprising a housing (20) in which the filter-holder (15) can be inserted manually, said mobile body (11) presenting a substantially hollow cylindrical shape, closed at the top with a cover (21), fixed on the body (11) by adjustable screws (22), placed in contrast with traction springs, the movement of the body (11) from a lowered release position to a raised traction position being allowed by a cam type automatism (23), said mobile body (11) being able to slide vertically on the slides (12) with respect to the dispenser unit (13) allowing the filter and the filter-holder (15) including the dose of coffee to be coupled automatically to the dispenser unit (13), **characterized in that** the cover (21) acts as a support for the mechanical parts for the sliding of the body (11) which consist of a motor (27), a cam (23), a shaft (24) and transmission gears, while, in correspondence with the lower part, the housing (20), in the hollow part, is delimited by a border (11') and is shaped in such a way as to accommodate the filter-holder (15), which is also cylindrical in shape and comprises peripheral coupling teeth (18) which form gripping elements for the border (11'), in order to position and fix the filter-holder against the dispenser unit (13).

2. A device (10) according to claim 1, **characterized in that** when the filter-holder is inserted the upward movement of the body (11) causes the movement and compression of the filter-holder unit against the dispenser unit (13), thus making it possible to proceed with dispensing of the coffee towards the lower part, through the nozzles (22) and into the respective cups.

3. A device (10) according to any one of the preceding claims, **characterized in that** the movement of the body (11) is actuated by an automatism consisting of a cylindrical cam (23) positioned on a decentralized shaft (24) which is in turn arranged on a horizontal axis by means of supports (25) forming part of the cover (21).

4. A device (10) according to claim 3, **characterized in that** the cam (23) presses against the dispenser unit (13), and since the shaft (24) fitted to the cover (21) is in turn integral with the body (11), by means of adjustable screws (22) placed in contrast with springs, it causes the movement of the entire body (11) upwards and vice versa.

5. A device (10) according to any one of claims 3 and 4, **characterized in that** the eccentric rotation of the cam (23) on the shaft (24) is made possible by a kinematic motion consisting of a pinion (26), driven by a motor (27), which engages with a second toothed pinion (28) integral with the cam shaft (24).

6. A device (10) according to any one of the preceding claims, **characterized in that** it comprises a controller, a PLC or other electronic control system, which causes the compression of the device, in combination with the calibration of the springs of the screws (22).

7. A device (10) according to any one of the preceding claims, **characterized in that** the adjustment and closing force of the filter-holder (15) against the dispenser unit is determined by the screws (22) fitted with respective springs, by means of which it is possible to adjust the compression force between the filter-holder and the dispenser unit (13).

8. A device (10) according to any one of the preceding claims, **characterized in that** it is part of a kit which can be fitted on existing or new generation machines and **in that** the entire body (11) and/or its individual parts, and/or the couplings of the slides, can in turn be shaped for application on specific and particular coffee machines.

## Patentansprüche

1. Vorrichtung (10) zum Automatisieren des Einsetzens und der Kompression des Filterhalters (15) in der Zubereitungseinheit (13) von professionellen Kaffeemaschinen oder Ähnlichem, wobei die Zubereitungseinheit (13) aus einem rundlichen Korpus besteht, dessen unterer Abschnitt derart gestaltet ist, dass er an den Filterhalter (15) ankoppelt, der mit einem Griff (16) ausgestattet ist, wobei der rundliche Korpus ein einziges Teil mit einer Halterung (17) bildet, die gestaltet ist, um am Gehäuse (14) der Kaffeemaschine mit Schrauben (18) angebracht zu werden, wobei die Vorrichtung (10) einen beweglichen Korpus (11) umfasst, der durch Schieber (12) mit der Möglichkeit eines vertikalen Schiebens an der Zubereitungseinheit (13) versehen ist, wobei der bewegliche Korpus (11) hohl ist und ein Gehäuse (20) umfasst, in das der Filterhalter (15) manuell eingesetzt werden kann, wobei der bewegliche Korpus (11) eine im Wesentlichen hohle, zylindrische Form hat, die oben mit einer Abdeckung (21) geschlossen ist und am Korpus (11) durch verstellbare Schrauben (22) befestigt ist, wobei im Gegensatz zu Zugfedern die Bewegung des Korpus (11) von einer abgesenkten Freigabeposition zu einer angehobenen Mitnahmeposition durch eine Art Nockenautomatik (23) ermöglicht wird, wobei der bewegliche Korpus (11) vertikal auf den Schiebern (12) hinsichtlich der Zubereitungseinheit (13) gleiten kann und es dem Filter und dem Filterhalter (15) ermöglicht, die die Kaffeedosis enthalten, automatisch an die Zubereitungseinheit (13) anzukoppeln, **dadurch gekennzeichnet, dass** die Abdeckung (21) als Stütze der mechanischen Teile der Gleitung des Korpus fungiert, die einen Motor (27), einen Nocken (23), eine Welle (24) und Übersetzungsgetriebe umfassen, während entsprechend dem unteren Abschnitt, das Gehäuse (20) im hohlen Abschnitt durch einen Rand (11') begrenzt ist, und derart geformt ist, dass der Filterhalter (15) untergebracht werden kann, der ebenfalls eine zylindrische Form aufweist und eine periphere Kupplungsverzahnung (18) umfasst, die Greifelemente für den Rand (11') zum Positionieren und Feststellen des Filterhalters gegen die Zubereitungseinheit (13) bilden.

2. Vorrichtung (10) nach Anspruch 1, **dadurch gekennzeichnet, dass** wenn der Filterhalter eingeführt wird, die Aufwärtsbewegung des Korpus (11) die Bewegung und Kompression der Filterhaltereinheit Zubereitungseinheit (13) verursacht, wodurch der Kaffee zum unteren Abschnitt durch die Düsen (22) und in die jeweiligen Tassen abgegeben wird.

3. Vorrichtung (10) nach einem der vorhergehenden Ansprüche, **dadurch gekennzeichnet, dass** die Bewegung des Korpus (11) durch eine Automatik ausgelöst wird, die sich aus einem zylindrischen Nocken (23) zusammensetzt, der auf einer dezentralisierten Welle (24) positioniert ist, die wiederum an einer horizontalen Achse durch Halterungen (25) angebracht ist und Teil der Abdeckung (21)bildet.

4. Vorrichtung (10) nach Anspruch 3, **dadurch gekennzeichnet, dass** der Nocken (23) gegen die Zubereitungseinheit (13) drückt, und da die Welle (24), die in die Abdeckung (21) gepasst ist, wiederum durch verstellbare Schrauben (22), die Federn entgegengesetzt sind, in den Korpus (11) integriert ist, wird die Bewegung des gesamten Korpus (11) nach oben und umgekehrt verursacht.

5. Vorrichtung (10) nach einem der Ansprüche 3 und 4, **dadurch gekennzeichnet, dass** die exzentrische Umdrehung des Nocken (23) auf der Welle (24) durch kinematische Bewegung des Ritzels (26), das durch einen Motor (27) angetrieben ist und in ein zweites verzahntes Ritzel (28) eingreift, das mit der Nockenwelle (24) verbunden ist, ermöglicht wird.

6. Vorrichtung (10) nach einem der vorhergehenden Ansprüche, **dadurch gekennzeichnet, dass** Vorhergehendes eine Steuerung, ein SPS- oder anderes elektronisches Steuersystem, das die Kompression der Vorrichtung zusammen mit der Kalibrierung der Federn der Schrauben (22) verursacht, umfasst.

7. Vorrichtung (10) nach einem der vorhergehenden Ansprüche, **dadurch gekennzeichnet, dass** die Einstellungs- und Schließkraft des Filterhalters (15) gegen die Zubereitungseinheit durch die Schrauben (22), die jeweils mit Federn montiert sind, die ein Anpassen der Kompressionskraft zwischen Filterhalter und Zubereitungseinheit (13) ermöglichen, bestimmt ist.

8. Vorrichtung (10) nach einem der vorhergehenden Ansprüche, **dadurch gekennzeichnet, dass** sie Teil eines Bausatzes ist, der bei bestehenden oder neuen Maschinengenerationen angewendet werden kann, und dass der gesamte Korpus (11) und/oder dessen individuelle Teile, und/oder die Kopplungen der Schieber, wiederum für die Anwendung in spezifischen oder besonderen Kaffeemaschinen gestaltet sein können.

## Revendications

1. Dispositif (10) destiné à automatiser l'insertion et la compression du porte-filtre (15) dans l'unité de distribution (13) de machines à café professionnelles ou similaires, ladite unité de distribution (13) consistant en un corps arrondi dont la partie inférieure est conçue pour se coupler avec le porte-filtre (15) muni d'une poignée (16), ledit corps arrondi formant une seule pièce avec un support (17) destiné à être fixé sur la caisse (14) de la machine à café au moyen de vis (18), ledit dispositif (10) comprenant un corps mobile (11) monté, au moyen de glissières (12), de manière à pouvoir coulisser verticalement, sur ladite unité de distribution (13), ledit corps mobile (11) étant creux et comprenant un boîtier (20) dans lequel le porte-filtre (15) peut être inséré manuellement, ledit corps mobile (11) présentant une forme sensiblement cylindrique et creuse, fermée en haut au moyen d'un couvercle (21), fixée sur le corps (11) au moyen de vis réglables (22), disposée de façon à s'opposer à des ressorts de traction, le déplacement du corps (11) d'une position de libération abaissée à une position de traction soulevée étant permis par un automatisme (23) de type came, ledit corps mobile (11) pouvant coulisser verticalement sur les glissières (12) par rapport à l'unité de distribution (13) ce qui permet de coupler le filtre et le porte-filtre (15) incluant la dose de café automatiquement à l'unité de distribution (13), **caractérisé en ce que** le couvercle (21) agit comme un support pour les pièces mécaniques servant au coulissement du corps (11) qui consistent en un moteur (27), une came (23), un arbre (24) et des engrenages de transmission, tandis que, en correspondance de la partie inférieure, le boîtier (20), dans la partie creuse, est délimité par un rebord (11') et est conformé de manière à recevoir le porte-filtre (15), qui est également de forme cylindrique et comporte des dents périphériques d'accouplement (18) qui forment des éléments de préhension du rebord (11'), afin de positionner et fixer le porte-filtre contre l'unité de distribution (13).

2. Dispositif (10) selon la revendication 1, **caractérisé en ce que**, lorsque le porte-filtre est inséré, le mouvement vers le haut du corps (11) provoque le mouvement et la compression de l'unité porte-filtre contre l'unité de distribution (13), ce qui permet de procéder à la distribution du café vers la partie inférieure jusque dans les tasses respectives à travers les buses (22).

3. Dispositif (10) selon l'une quelconque des revendications précédentes, **caractérisé en ce que** le mouvement du corps (11) est commandé par un automatisme constitué d'une came cylindrique (23) positionnée sur un arbre décentré (24), qui est disposé de son côté sur un axe horizontal au moyen de supports (25) faisant partie du couvercle (21).

4. Dispositif (10) selon la revendication 3, **caractérisé en ce que** la came (23) presse contre l'unité de distribution (13), et comme l'arbre (24) monté sur le couvercle (21) est de son côté solidaire du corps (11), au moyen de vis réglables (22) placées de façon à s'opposer à des ressorts, il provoque le déplacement de tout le corps (11) vers le haut et vice versa.

5. Dispositif (10) selon l'une quelconque des revendications 3 et 4, **caractérisé en ce que** la rotation excentrique de la came (23) sur l'arbre (24) est rendue possible par un mouvement cinématique constitué par un pignon (26), entraîné par un moteur (27), qui est en prise avec un second pignon denté (28) solidaire de l'arbre à cames (24).

6. Dispositif (10) selon l'une quelconque des revendications précédentes, **caractérisé en ce qu'**il comprend un dispositif de commande, un PLC ou un autre système de commande électronique, qui provoque la compression du dispositif, en combinaison avec le calibrage des ressorts des vis (22).

7. Dispositif (10) selon l'une quelconque des revendications précédentes, **caractérisé en ce que** la force de réglage et de fermeture du porte-filtre (15) contre l'unité de distribution est déterminée par les vis (22) équipées de ressorts respectifs, au moyen desquelles il est possible de régler la force de compression entre le porte-filtre et l'unité de distribution (13).

8. Dispositif (10) selon l'une quelconque des revendications précédentes, **caractérisé en ce qu'**il fait partie d'un kit qui peut être monté sur des machines existantes ou de nouvelle génération, et **en ce que** tout le corps (11) et/ou ses parties individuelles, et/ou les moyens d'accouplements des glissières, peuvent de leur côté être conformés en vue d'une application à des machines à café spécifiques et particuliers.
